(19) Europäisches Patentamt
European Patent Office
Office européen des brevets

(11) **EP 4 042 556 B1**

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **20824099.4**

(22) Anmeldetag: **25.11.2020**

(51) Internationale Patentklassifikation (IPC):
**B60L 15/02** (2006.01)   **B60L 15/20** (2006.01)
**B60L 50/60** (2019.01)   **H02J 7/00** (2006.01)
**H02P 1/26** (2006.01)

(52) Gemeinsame Patentklassifikation (CPC):
**H02P 1/26; B60L 15/025; B60L 15/20; B60L 50/60;**
B60L 2200/26; H02J 7/0063; H02J 2310/48;
H02P 2207/01; Y02T 10/70

(86) Internationale Anmeldenummer:
**PCT/EP2020/083407**

(87) Internationale Veröffentlichungsnummer:
**WO 2021/121890 (24.06.2021 Gazette 2021/25)**

(54) **VERFAHREN ZUR STEUERUNG EINER STROMABGABE EINER BATTERIE**

METHOD FOR CONTROLLING THE CURRENT OUTPUT OF A BATTERY

PROCÉDÉ DE COMMANDE DE LA SORTIE DE COURANT D'UNE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2019 DE 102019219677**

(43) Veröffentlichungstag der Anmeldung:
**17.08.2022 Patentblatt 2022/33**

(73) Patentinhaber: **Siemens Mobility GmbH 81739 München (DE)**

(72) Erfinder: **HOFFMANN, Wolfgang 91056 Erlangen (DE)**

(74) Vertreter: **Siemens Patent Attorneys Postfach 22 16 34 80506 München (DE)**

(56) Entgegenhaltungen:
CN-A- 107 379 983    DE-B3- 102018 203 015
JP-A- 2009 072 003

**Beschreibung**

Die Erfindung betriff ein Verfahren zur Steuerung einer Stromabgabe einer Batterie, wobei die Batterie als Traktionsbatterie zum Antrieb eines Schienenfahrzeugs benutzt wird.

Es sind Batterie-betriebene Schienenfahrzeuge bekannt, bei denen elektrische Leistung der Batterie entnommen und zum Antrieb von Motoren verwendet wird.

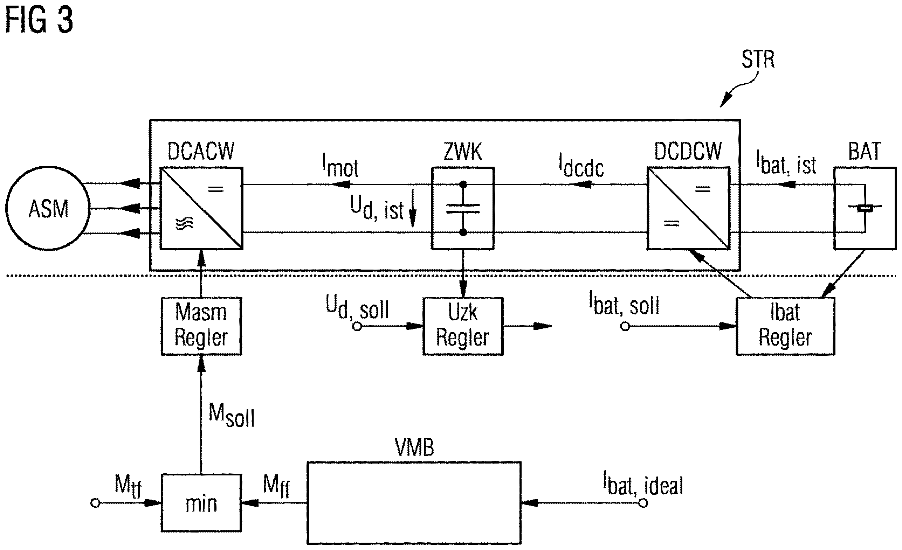

FIG 3 zeigt in einer vereinfachten Prinzipdarstellung einen geregelten Antrieb eines derartigen Schienenfahrzeugs gemäß dem Stand der Technik.

Ein Stromrichter STR ist eingangsseitig mit einer Batterie BAT und ausgangsseitig mit einem Asynchronmotor ASM verbunden.

Der Asynchronmotor ASM wird als Fahrmotor eines Triebfahrzeugs- bzw. Schienenfahrzeugs verwendet, während die Batterie BAT als Traktionsbatterie dient.

Der Stromrichter STR beinhaltet eine Serienschaltung, die aufeinander folgend aus einem DC/DC-Wandler DCDCW, einem (Gleichstrom-) Zwischenkreis ZWK und aus einem DC/AC-Wandler DCACW besteht.

Der DC/DC-Wandler DCDCW ist als Eingangselement des Stromrichters STR mit der Batterie BAT verbunden, während der DC/AC-Wandler DCACW als Ausgangselement des Stromrichters STR mit dem Asynchronmotor ASM verbunden ist.

Damit gelangt aus der Batterie BAT ein elektrischer Batterie-Iststrom $I_{bat,ist}$ zum DC/DC-Wandler DCDCW des Stromrichters STR, der diesen in einen Zwischenkreis-Gleichstrom $I_{dcdc}$ umwandelt.

Der Zwischenkreis-Gleichstrom $I_{dcdc}$ gelangt über den Zwischenkreis ZWK als Motorstrom $I_{mot}$ zum DC/AC-Wandler DCACW.

Im Zwischenkreis ZWK ist ein Kondensator angeordnet, an dem eine Differenz-Istspannung $U_{d,ist}$ anliegt.

Der Motorstrom $I_{mot}$ gelangt über den DC/AC-Wandler DCACW als Drehstrom zum Asynchronmotor ASM, um diesen anzutreiben.

Der DC/DC-Wandler DCDCW wird über einen Batterie-Stromregler $I_{bat}$-Regler geregelt, um den Zwischenkreis-Gleichstrom $I_{dcdc}$ einzustellen. Zu diesem Zweck wird dem Batterie-Stromregler $I_{bat}$-Regler als Eingangssignal ein Batteriesollstrom $I_{bat,soll}$ und ein Iststrom $I_{bat,ist}$ der Batterie BAT zugeführt.

Der Zwischenkreis ZWK ist mit einem Zwischenkreis-Spannungsregler $U_{zk}$-Regler verbunden. Dem Zwischenkreis-Spannungsregler $U_{zk}$-Regler wird als Eingangssignal eine Differenz-Sollspannung $U_{d,soll}$ und eine Differenz-Istspannung $U_{d,ist}$ zugeführt. Daraus wird der Batteriesollstrom $I_{bat,soll}$ gebildet.

Der DC/AC-Wandler DCACW und der Asynchronmotor ASM werden über einen Asynchronmotor-Momentenregler $M_{asm}$-Regler geregelt. Zu diesem Zweck wird dem Asynchronmotor-Momentenregler $M_{asm}$-Regler als Eingangssignal ein Momentensollwert $M_{soll}$ zugeführt.

Der Momentensollwert $M_{soll}$ wird aus einem Vorsteuerungsmoment $M_{ff}$ und aus einem Vorgabemoment $M_{tf}$ gebildet, die als jeweilige Eingangssignale einer Minimalwertbildungs-Einheit MIN zugeführt werden.

Das Vorsteuerungsmoment $M_{ff}$ wird dabei mit Hilfe einer Vorsteuerungsmoment-Berechnungseinheit VMB berechnet, während das Vorgabemoment $M_{tf}$ vom Triebfahrzeug- bzw. Schienenfahrzeugführer zu einem Zeitpunkt angefordert bzw. freigegeben wird.

Mit Hilfe der Minimalwertbildungs-Einheit MIN wird folgende Bedingung sichergestellt:

$$M_{soll} \leq M_{tf}$$

Zur Berechnung des Vorsteuerungsmoment $M_{ff}$ wird der Vorsteuerungsmoment-Berechnungseinheit VMB ein Batterie-Idealstrom $I_{bat,ideal}$ zugeführt.

Das Vorsteuerungsmoment $M_{ff}$ wird dabei so berechnet, dass der Batterie-Iststrom $I_{bat,ist}$ so genau als möglich dem vorgegebenen Batterie-Idealstrom $I_{bat,ideal}$ entspricht:

$$I_{bat,ist} = I_{bat,ideal}$$

Der Batterie-Idealstrom $I_{bat,ideal}$ ist dabei so festgelegt bzw. so definiert, dass bei Fahrvorgängen des Triebfahrzeugs ein vorgegebener Batterie-Maximalstrom nicht überschritten wird. Dies ist nötig, um eine Sicherheits-Abschaltung der Batterie BAT aufgrund zu hoher Ströme bzw. aufgrund zu hoher Leistungsentnahme zu vermeiden.

Der Batterie-Idealstrom $I_{bat,ideal}$ ist darüber hinaus so definiert, dass er einen schnellen Aufbau eines geforderten Traktionsmomentes des Asynchronmotors ASM ermöglicht. Dies ist nötig, um Einschränkungen bei der Fahrt des Triebfahrzeugs soweit als möglich zu reduzieren.

Die Berechnung des Vorsteuerungsmoments $M_{ff}$ erfolgt klassisch mit Hilfe einer dynamischen (transformierten) Übertragungsfunktion $H_{sys}(z)$ des Momenten-Sollwerts $M_{soll}$ auf den Batterie-Iststrom $I_{bat,ist}$.

Die Übertragungsfunktion $H_{sys}(z)$ wird invertiert, um eine inverse Übertragungsfunktion $H_{sys}^{-1}(z)$ zu erhalten.

Die inverse Übertragungsfunktion $H_{sys}^{-1}(z)$ wird mit dem (transformierten) Batterie-Idealstrom $I_{bat,ideal}(z)$ multipliziert, um daraus das Vorsteuerungsmoment $M_{ff}(z)$ zu erhalten. Dies wird nachfolgend weiter erläutert.

Über die hier gezeigte Prinzipdarstellung wird erreicht, dass bei den Fahrvorgängen die Batterie BAT in elektrisch idealer Weise eingesetzt wird, ohne vorgegebene Strombegrenzungswerte der Batterie BAT zu verletzen.

Damit wird ermöglicht, dass jeweilige Antriebskomponenten des Triebfahrzeugs bei Fahrvorgaben des Triebfahrzeugführers energieoptimal betrieben werden. Damit steht zu jeder Zeit eine projektierte Zugkraft des Triebfahrzeugs dem Triebfahrzeugführer im maximalen Umfang zur Verfügung.

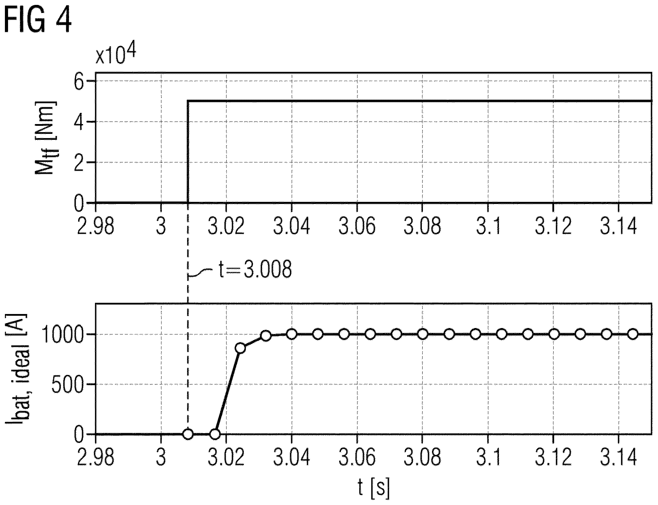

FIG 4 zeigt mit Bezug auf FIG 3 eine Gegenüberstellung des Vorgabemoments $M_{tf}$ des Triebfahrzeugführers zu einem gewünschten Batterie-Idealstrom $I_{bat,ideal}$.

Zum Zeitpunkt t=3,008 wird beispielhaft vom Triebfahrzeugführer das Vorgabemoment $M_{tf}$ angefordert bzw. freigegeben.

Zum Zeitpunkt t=3,016 erfolgt zeitverzögert dann eine ideale, gewünschte Stromabgabe aus der Batterie BAT in Form des Batterie-Idealstroms $I_{bat,ideal}$. Der gewünschte Verlauf des Batterie-Idealstroms $I_{bat,ideal}$ ist dabei linear und weist keinerlei Oszillationen auf.

In diesem Beispiel gilt für eine Transformierte des Batterie-Idealstroms $I_{bat,ideal}(z)$ beispielhaft folgende Beziehung:

$$I_{bat,ideal}(z) = 850\, z\, /\, (z^2 - 1{,}15z + 0{,}15)$$

Dies ist die mathematische Beschreibung zum dargestellten Verlauf.

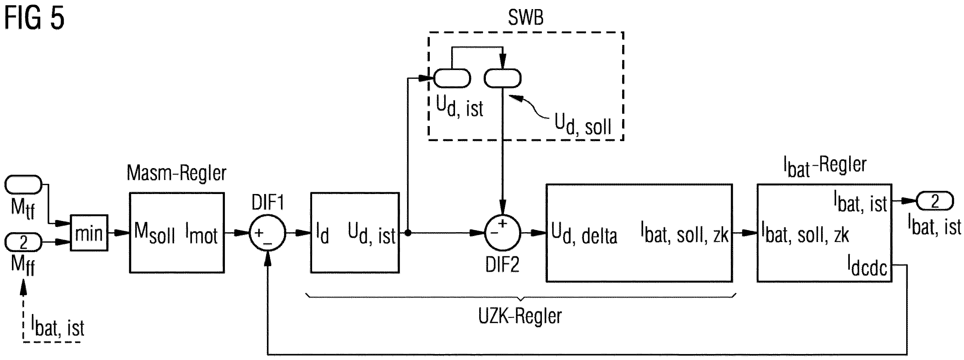

FIG 5 zeigt einen Signalflussgrafen der Regelstrecke des Batterie-Antriebssystems aus FIG 3.

Wie vorstehend unter FIG 3 beschrieben, wird aus dem Vorsteuerungsmoment $M_{ff}$ und aus dem Vorgabemoment Triebfahrzeugführer $M_{tf}$ der Momenten-Sollwert $M_{soll}$ gebildet, der als Eingangssignal an den Asynchronmotor-Momentenregler $M_{asm}$-Regler gelangt.

Der Asynchronmotor-Momentenregler $M_{asm}$-Regler regelt über den DC/AC-Wandler DCACW das Moment des Asynchronmotors ASM. Daraus ergibt sich der Motorstrom $I_{mot}$.

Der Motorstrom $I_{mot}$ gelangt an einen ersten Eingang einer erste Differenzbildungs-Einheit DIF1.

Der Zwischenkreis-Gleichstrom $I_{dcdc}$ gelangt an einen zweiten Eingang der ersten Differenzbildungs-Einheit DIF1.

Die Differenzbildungs-Einheit DIF1 bildet aus diesen Strömen einen Differenzstrom $I_d$:

$$I_d = I_{mot} - I_{dcdc}.$$

Der Differenzstrom $I_d$ gelangt als Eingangssignal an den Zwischenkreisspannungs-Regler $U_{zk}$-Regler und wird in die Differenz-Istspannung $U_{d,ist}$ umgesetzt.

Die Differenz-Istspannung $U_{d,ist}$ gelangt an einen ersten Eingang einer zweiten Differenzbildungs-Einheit DIF2.

Die Differenz-Istspannung $U_{d,ist}$ gelangt als Eingangssignal an einen Sollwertbilder SWB, der anhand der Differenz-Istspannung $U_{d,ist}$ die Differenz-Sollspannung $U_{d,soll}$ vorgibt.

Die Differenz-Sollspannung $U_{d,soll}$ gelangt als Ausgangssignal des Sollwertbilders SWB an einen zweiten Eingang der zweiten Differenz-Bildungseinheit DIF2.

Die zweite Differenzbildungseinheit DIF2 bildet aus den zugeführten Spannungen eine Differenzspannung $U_{d,delta}$:

$$U_{d,delta} = U_{d,soll} - U_{d,ist}.$$

Für die Differenzspannung $U_{d,delta}$ wird ein zugehöriger Zwischenkreis-Batteriesollstrom $I_{bat,soll,zk}$ ermittelt.

Der Zwischenkreis-Batteriesollstrom $I_{bat,soll,zk}$ gelangt als Eingangssignal an den Batterie-Stromregler $I_{bat}$-Regler, der darauf basierend sowohl den Batterie-Iststrom $I_{bat,ist}$ als auch den Zwischenkreis-Gleichstrom $I_{dcdc}$ vorgibt.

Wie oben dargestellt gilt:

$$I_{bat,ist} = I_{bat,ideal}$$

und

$$\mathtt{I_{bat}(z) = H_{sys}(z)\ M_{soll}(z)}$$

Die zur Modellierung des gezeigten Signalflussgrafen verwendeten Teilmodelle sind linear gestaltet.

Das dafür notwendige Vorsteuerungsmoment $M_{ff}$ wird jetzt wie folgt berechnet:

$$\mathtt{M_{ff}(z) = H_{sys}^{-1}(z)\ I_{bat,ideal}(z)\ /\ z}$$

Die Übertragungsfunktion $H_{sys}(z)$ einer typischen Systemmodellierung von FIG 3 ist nicht minimalphasig, so dass sie nicht stabil invertierbar ist. Dies ist daran zu erkennen, dass eine Nullstelle znmp außerhalb des Einheitskreises existiert.

Ein daraus berechnetes Vorsteuerungsmoment würde also unendlich groß werden und kann somit nicht verwendet werden.

Ein beispielhaftes, realistisches Zahlenbeispiel für die Übertragungsfunktion $H_{sys}(z)$ mit Blick auf FIG 3 könnte wie folgt lauten:

$$\mathtt{H_{sys}(z) =}$$

$$\mathtt{(0.030226(z+1.017)(z+0.4928))/((z-0.2636)(\textit{z}^2+1.761z+0.7783))}$$

mit einer Nullstelle znmp = -1.017.

Diese Nullstelle znmp liegt außerhalb des Einheitskreises, so dass beim Batteriestrom Oszillationen zu erwarten sind, während das Vorsteuerungsmoment über alle Grenzen wachsen müsste.

Um dieses Problem zu umgehen, wird in der Praxis bei Triebfahrzeugherstellern die dynamische Übertragungsfunktion $H_{sys}(z)$ nicht als Ganzes invertiert, sondern nur ihr statischer Anteil. Dies erfolgt durch folgende Näherung:

$$\mathtt{H_{sys}^{praxis}(z) = H_{sys}(z=1)}$$

$H_{sys}(z=1)$ ist ein Skalar, der problemlos invertiert werden kann.

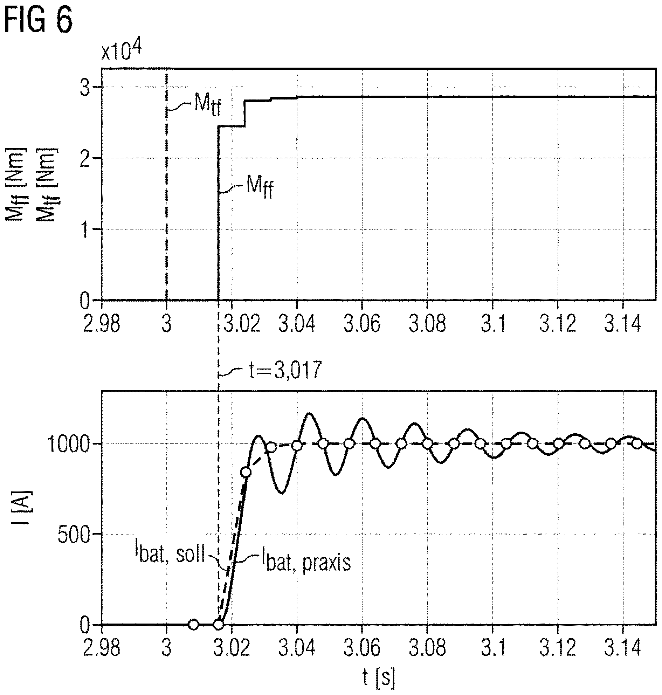

FIG 6 zeigt mit Bezug auf FIG 3 bis FIG 5 eine Gegenüberstellung des Vorgabemoments $M_{tf}$ des Triebfahrzeugführers, des Vorsteuerungsmoments $M_{ff}$ sowie den Verlauf eines Batterie-Stroms $I_{bat}$ aus der Praxis.

Zum Zeitpunkt t=3 wird beispielhaft vom Triebfahrzeugführer das Vorgabemoment $M_{tf}$ angefordert bzw. freigegeben.

Zum Zeitpunkt t=3,017 wird in der Praxis ein zeitlich verzögertes Vorsteuerungsmoment $M_{ff}$ gebildet, das Stufen aufweist.

Zum Zeitpunkt t=3,017 ist bei der Darstellung des Batteriestroms $I_{bat}$ ein dazu gewünschter (idealer) Batterie-Sollstrom $I_{bat,soll}$ gezeigt, dessen Verlauf linear und Oszillations-frei ist.

Zum Zeitpunkt t=3,017 ist bei der Darstellung des Batteriestroms $I_{bat}$ ein realer, der Praxis entsprechender Batterie-Strom $I_{bat,praxis}$ gezeigt, dessen Verlauf linear jedoch mit Oszillationen behaftet ist.

Diese Oszillationen sind störend, weil sich das Batteriesystem, wie oben beschrieben, aufgrund der Oszillationen abschalten könnte.

Über die oben beschrieben praktische Vorgehensweise wird für den Batteriestrom ein langsamer Anstieg vorgegeben, wobei jedoch Zugkraft mit Folgen für Fahrspiel, Fahrpläne und mit Folgen für eine Auslegung von Antriebskomponenten verschenkt wird.

Aus Dokument DE 10 2018 203 015 B3 ist ein Verfahren zur Regelung eines Batteriestroms einer Traktionsbatterie bekannt. Dabei wandelt eine Gleichrichter-Einheit des Traktionssystems eine Netzspannung mittels eines vorgebbaren Einspeisestroms in eine regelbare Zwischenkreisspannung eines Zwischenkreises des Traktionssystems. Ein Zwischenkreis-Spannungsregler regelt einen Spannungsistwert der Zwischenkreisspannung auf einen Spannungssollwert der Zwischenkreisspannung und gibt eine erste Ausgangsgröße vor. Ein Batterie-Stromregler regelt einen Stromistwert des Batteriestroms auf einen Stromsollwert des Batteriestroms und gibt eine zweite Ausgangsgröße vor. Die erste Ausgangsgröße des Zwischenkreis-Spannungsreglers wird mit der zweiten Ausgangsgröße des Batterie-Stromreglers zur Bildung einer Vorgabegröße für den Einspeisestrom beaufschlagt, wobei mittels des anhand der Vorgabegröße vorgegebenen Einspeisestroms der Stromistwert des Batteriestroms zu dessen Regelung nachgestellt wird.

Es ist daher die Aufgabe der vorliegenden Erfindung, ein Verfahren zur Vorgabe einer Momenten-Vorsteuerung

$M_{ff}$ für ein Triebfahrzeug mit Traktionsbatterie anzugeben, mit dem bei Anfahrt-Vorgängen die Stromentnahme an der Batterie ideal ausgenutzt wird, ohne dabei vorgebebene Stromgrenzwerte der Batterie zu verletzen.

Diese Aufgabe wird durch die Merkmale des Anspruchs 1 gelöst. Vorteilhafte Weiterbildungen sind in den Unteransprüchen angegeben.

Das erfindungsgemäße Verfahren beruht zusammengefasst darauf, dass ein instabiler Systemteil der inversen Übertragungsfunktion von $H_{sys}(z)$ derart behandelt wird, dass beim Batteriestrom Oszillationen und instabiles Verhalten verhindert werden.

Dazu wird der Batterie-Idealstrom zur Berechnung des Vorsteuerungsmoments $M_{ff}$ wie folgt manipuliert:

$$M_{ff}(z) = H_{sys}^{-1}(z) \; I_{bat,neu}(z) \; / \; z$$

$$M_{ff}(z) = I_{bat,neu}(z) \; / \; (H_{sys}(z) \; z)$$

mit

$$I_{bat,neu}(z) = I_{bat,ideal}(z) - I_{bat,ideal}(znmp)$$

Daraus folgt:

$$M_{ff}(z) = (I_{bat,ideal}(z) - I_{bat,ideal}(znmp)) \; / \; (H_{sys}(z) \; z)$$

Mit der Wahl von $z = znmp$ beim Batterie-Idealstrom $I_{bat,ideal}$ wird eine Pol-/Nullstellen-Auslöschung erreicht.

Durch die Pol-/Nullstellen-Auslöschung werden mit Blick auf die vorstehenden Figuren Oszillationen reduziert bzw. verhindert.

Bei der vorliegenden Erfindung wird zur z-Transformierten des gewünschten Batteriestrom-Idealwerts $I_{bat,ideal}(z)$ eine Nullstellen-abhängige Konstante addiert.

Der Wert der Konstanten ist als $I_{bat,ideal}(znmp)$ bezeichnet, wobei $z=znmp$ die Lage einer Nullstelle außerhalb des Einheitskreises der Übertragungsfunktion $H_{sys}(z)$ bezeichnet.

Die Addition der Konstanten $I_{bat,ideal}(znmp)$ im z-Bereich wirkt sich im Zeitbereich nur auf den ersten Wert der zugehörigen Folge aus.

Das ursprüngliche ideale Signal des Batteriestroms $I_{bat,ideal}(z)$ muss nur an der ersten Stelle verändert werden, ansonsten gilt folgende Beziehung:

$$I_{bat,neu}[n] = I_{bat,ideal}[n] \; \text{für alle } n > 0.$$

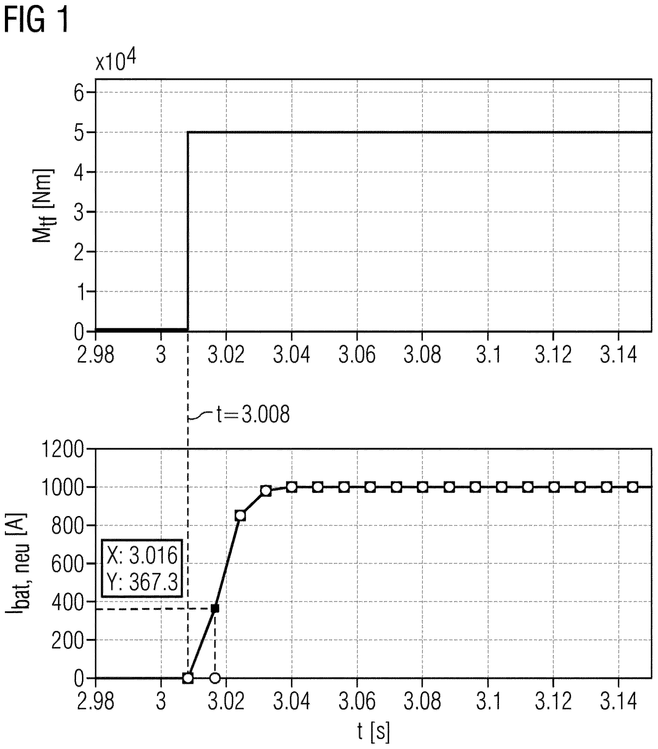

FIG 1 zeigt mit Bezug auf FIG 3 eine Gegenüberstellung des Vorgabemoments $M_{tf}$ des Triebfahrzeugführers zu einem Batterie-Strom $I_{bat,neu}$, der mit Hilfe der vorliegenden Erfindung manipuliert wurde, um der Batterie entnommen zu werden.

Zum Zeitpunkt t=3,008 wird beispielhaft vom Triebfahrzeugführer das Vorgabemoment $M_{tf}$ angefordert bzw. freigegeben.

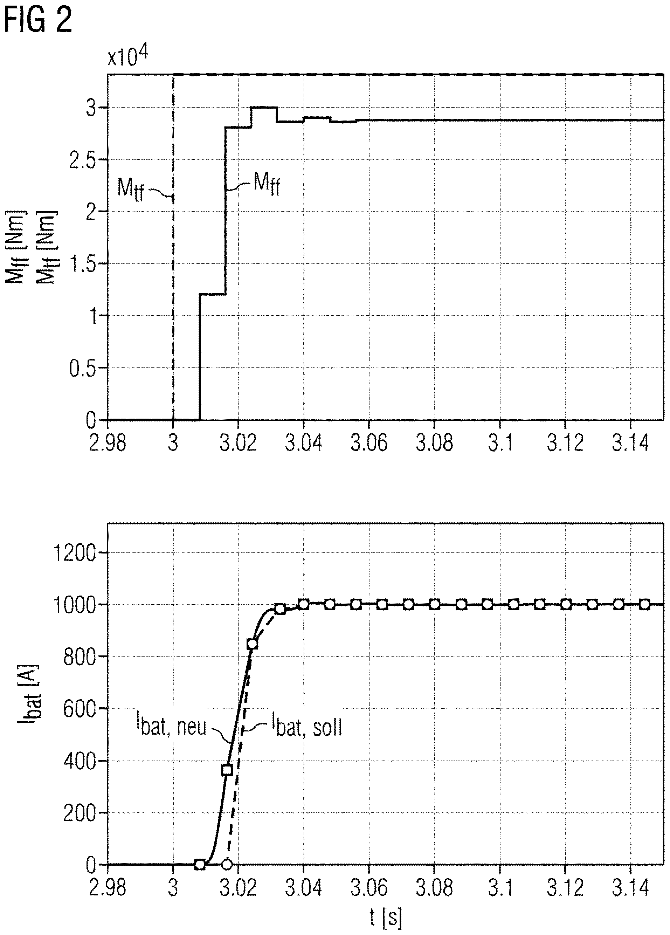

Mit Bezug auf FIG 2 erfolgt zum Zeitpunkt t=3,008 eine Stromabgabe aus der Batterie BAT in Form des Batterie-Stroms $I_{bat,neu}$.

Der gewünschte Verlauf des Batterie-Stroms $I_{bat,neu}$ weist keine Oszillationen und keine Überschwinger mehr auf.

Mit Bezug auf FIG 4 war ursprünglich der erste Wert des idealen Batteriestroms $I_{bat,ideal}[n] = 0$ zum Zeitpunkt t=3,016.

Nach erfolgter erfindungsgemäßer Manipulation ist der Wert des idealen, neuen Batteriestroms $I_{bat,ideal}[n] = 367{,}3$ A zum Zeitpunkt t=3.016 s.

Entsprechend wird unter Beachtung des erfindungsgemäßen Prinzips die z-Transformierte des neuen Verlaufs des neuen Batteriestroms $I_{bat,neu}(z)$ mit der Übertragungsfunktion der Inversen der Übertragungsfunktion $H_{sys}^{-1}(z)$ wie folgt multipliziert:

$$M_{ff}(z) = H_{sys}^{-1}(z) I_{bat,neu}(z) / z$$

Daraus ergibt sich eine Momenten-Vorgabe Vorsteuerung $M_{ff}(z)$, deren Werte nicht länger oszillieren bzw. deren Werte innerhalb vorgegebener Grenzen bleiben.

FIG 2 zeigt eine Gegenüberstellung des Vorgabemoments $M_{tf}$ des Triebfahrzeugführers, des Vorsteuerungsmoments $M_{ff}$ sowie den Verlauf eines Batterie-Stroms $I_{bat}$ basierend auf der vorliegenden Erfindung.

Zum Zeitpunkt t=3 wird beispielhaft vom Triebfahrzeugführer das Vorgabemoment $M_{tf}$ angefordert bzw. freigegeben.

Zum Zeitpunkt t=3,008 wird ein zeitlich verzögertes Vorsteuerungsmoment $M_{ff}$ gebildet, das Stufen aufweist.

Zum Zeitpunkt t=3,017 ist bei der Darstellung des Batteriestroms $I_{bat}$ ein dazu gewünschter (idealer) Batterie-Sollstrom $I_{bat,soll}$ gezeigt, dessen Verlauf linear und Oszillations-frei ist.

Zum Zeitpunkt t=3,008 ist bei der Darstellung des Batteriestroms $I_{bat}$ ein erfindungsgemäß gebildeter Batterie-Strom $I_{bat,neu}$ gezeigt, dessen Verlauf linear und frei von Oszillationen ist.

Der Verlauf des Batterie-Stroms $I_{bat,neu}$ folgt dem gewünschten Batterie-Strom $I_{bat,soll}$ in sehr guter Annäherung.

Die vorliegende Erfindung ermöglicht die Generierung eines Momenten-Sollwerts $M_{soll}$, wobei ein gewünschter Batteriestrom je nach Leistungsanforderung vom Zugfahrzeugführer ohne Verletzung von Grenzvorgaben der Batterie entnommen wird.

Die vorliegende Erfindung ermöglicht die ideale Einstellung des Batteriestroms, ohne dabei Überschwinger bzw. Oszillationen im Batteriestrom zu verursachen.

Das erfindungsgemäße Verfahren beruht darauf, dass ein instabiler Systemteil vom neuen Sollsignalverlauf nicht angeregt wird.

Wie oben ausgeführt gilt:

$$M_{ff}(z) = H_{sys}^{-1}(z) I_{bat,neu}(z) / z$$

$$M_{ff}(z) = I_{bat,ideal}(z) - I_{bat,ideal}(znmp) / (z H_{sys}(z))$$

Man erkennt für z-> znmp eine Pol-/Nullstellen-Auslöschung. Damit wird erreicht, dass die berechnete Folge für $I_{bat,neu}$ nicht mehr über vorgegebene Grenzen hinweg oszilliert.

Dies ist auch an einem konkreten Zahlenbeispiel ablesbar, das sich auf die oben gemachten Ausführungen zu $H_{sys}(z)$ stützt:

$$\begin{aligned} M_{ff}(z) &= \frac{(z-0.2636)(z^2 + 1.761z + 0.7783)}{0.030226\,(z+1.017)(z+0.4928)z} \left( \frac{850z}{z^2 - 1.15\,z + 0.15} + 367{,}26 \right) \\ &= \frac{(z-0.2636)(z^2 + 1.761z + 0.7783)}{0.030226\,(z+1.017)(z+0.4928)z} \frac{367.26\,(z+1.017)(z+0.1475)}{(z-1)(z-0.15)} \\ &= 12151\frac{(z-0.2636)(z^2 + 1.761z + 0.7783)}{(z+0.4928)z} \frac{(z+0.1475)}{(z-1)(z-0.15)}, \end{aligned}$$

Man erkennt, dass der ursprünglich vorhandene Pol zp=-1,017 außerhalb des Einheitskreises nach der Umformung nicht mehr vorhanden ist.

## Patentansprüche

1. Verfahren zur Steuerung einer Stromabgabe einer Batterie (BAT), wobei die Batterie (BAT) als Traktionsbatterie zum Antrieb (ASM) eines Schienenfahrzeugs benutzt wird,

   - bei dem ein Batterie-Iststrom $I_{bat,ist}$ über einen DC/DC-Wandler (DCDCW) als Zwischenkreis-Gleichstrom $I_{dcdc}$ zu einem Zwischenkreis (ZWK) gelangt,
   - bei dem am Zwischenkreis (ZWK) eine Differenz-Istspannung $U_{d,ist}$ anliegt,
   - bei dem der Zwischenkreis-Gleichstrom $I_{dcdc}$ als Motorstrom $I_{mot}$ vom Zwischenkreis (ZWK) zu einem DC/AC-Wandler (DCACW) gelangt, der den Motorstrom $I_{mot}$ in einen dreiphasigen Wechselstrom umsetzt,

- bei dem der dreiphasige Wechselstrom einem Asynchronmotor (ASM) zugeführt wird, der als Antrieb des Schienenfahrzeugs benutzt wird,
- bei dem der Asynchronmotor (ASM) und der DC/AC-Wandler (DCACW) über einen Momentenregler ($M_{asm}$-Regler) geregelt werden,
- bei dem der Momentenregler ($M_{asm}$-Regler) zur Regelung einen Momentensollwerts $M_{soll}$ verwendet wird, durch den der Motorstrom $I_{mot}$ eingestellt wird,
- bei dem ein Zwischenkreis-Spannungsregler ($U_{zk}$-Regler) basierend auf einer Differenz-Sollspannung $U_{d,soll}$ und basierend auf einer Differenz-Istspannung $U_{d,ist}$ einen Batterie-Sollstrom $I_{bat,soll}$ bestimmt, auf den basierend der Zwischenkreis-Gleichstrom $I_{dcdc}$ einstellt wird,
- bei dem der DC/DC-Wandler (DCDCW) über einen Batterie-Stromregler ($I_{bat}$-Regler) geregelt wird, der basierend auf dem Batterie-Sollstrom $I_{bat,soll}$ und basierend auf dem Batterie-Iststrom $I_{bat,ist}$ den Zwischenkreis-Gleichstrom $I_{dcdc}$ einstellt,
- bei dem der Momentensollwert $M_{soll}$ aus einem Vorsteuerungsmoment $M_{ff}$ und aus einem Vorgabemoment $M_{tf}$ unter Beachtung der Beziehung $M_{tf} > \max (M_{ff})$ gebildet wird,
- bei dem das Vorsteuerungsmoment $M_{ff}$ basierend auf dem Batterie-Iststrom $I_{bat,ist}$ gebildet wird, bis der Batterie-Iststrom $I_{bat,ist}$ einem Batterie-Idealstrom $I_{bat,ideal}$ entspricht,
- bei dem die Berechnung des Vorsteuerungsmoments $M_{ff}$ mit Hilfe einer Übertragungsfunktion $H_{sys}(z)$ erfolgt, die den Momenten-Sollwert $M_{soll}$ auf den Batterie-Iststrom $I_{bat,ist}$ wie folgt abbildet:

$$\mathrm{I_{bat}(z) \ = \ H_{sys}(z) \ M_{soll}(z),}$$

**dadurch gekennzeichnet,**

- **dass** von der Übertragungsfunktion $H_{sys}(z)$ eine Nullstelle $z=znmp$ bestimmt wird, die außerhalb des Einheitskreises liegt,
- **dass** die Berechnung des Vorsteuerungsmoments $M_{ff}$ wie folgt durchgeführt wird:

$$\mathrm{M_{ff}(z) \ = \ I_{bat,neu}(z) \ / \ (H_{sys}(z) \ z)}$$

mit:

$$\mathrm{I_{bat,neu}(z) \ = \ I_{bat,ideal}(z) \ - \ I_{bat,ideal}(z=znmp)}$$

und mit:

$$\mathrm{I_{bat,neu}[n] \ = \ I_{bat,ideal}[n] \ f\ddot{u}r \ alle \ n > 0,}$$

so dass durch $z = znmp$ beim Batterie-Idealstrom $I_{bat,ideal}$ eine Polstellen-Nullstellen-Auslöschung erreicht wird.

2. Verfahren nach Anspruch 1, bei dem als DC/AC-Wandler (DCACW) ein Umrichter verwendet wird.

3. Verfahren nach Anspruch 1, bei dem die Istspannung ($U_{d,ist}$) des Zwischenkreises (ZWK) an einem Kondensator anliegt.

4. Verfahren nach Anspruch 1, bei dem das Vorgabemoment ($M_{tf}$) über einen Triebfahrzeugführer angefordert bzw. freigegeben wird.

5. Verfahren nach Anspruch 1, bei dem der Batterie-Idealstrom ($I_{bat,ideal}$) so festgelegt bzw. definiert wird, dass vorgegebene Batterie-Maximalströme bei Fahrvorgängen des Schienenfahrzeugs nicht überschritten werden.

6. Verfahren nach Anspruch 1, bei dem der Batterie-Idealstrom ($I_{bat,ideal}$) so festgelegt bzw. definiert wird, dass ein schneller Aufbau eines geforderten Traktionsmomentes des Asynchronmotors (ASM) ermöglicht wird.

**Claims**

1.  Method for controlling a current output of a battery (BAT), wherein the battery (BAT) is used as a traction battery for driving (ASM) a rail vehicle,

    - in which an actual battery current $I_{bat,ist}$ passes, as a link circuit direct current $I_{dcdc}$, to a link circuit (ZWK) via a DC/DC converter (DCDCW),
    - in which an actual differential voltage $U_{d,ist}$ is applied to the link circuit (ZWK),
    - in which the link circuit direct current $I_{dcdc}$ passes, as a motor current $I_{mot}$, from the link circuit (ZWK) to a DC/AC converter (DCACW), which converts the motor current $I_{mot}$ to a three-phase alternating current,
    - in which the three-phase alternating current is fed to an asynchronous motor (ASM), which is used as drive of the rail vehicle,
    - in which the asynchronous motor (ASM) and the DC/AC converter (DCACW) are controlled via a torque controller ($M_{asm}$ controller),
    - in which the torque controller ($M_{asm}$ controller) is used to control a setpoint torque value $M_{soll}$, by way of which the motor current $I_{mot}$ is set,
    - in which a link circuit voltage controller ($U_{zk}$ controller) determines a setpoint battery current $I_{bat,soll}$ based on a setpoint differential voltage $U_{d,soll}$ and based on an actual differential voltage $U_{d,ist}$, the link circuit direct current $I_{dcdc}$ being set based on said setpoint battery current,
    - in which the DC/DC converter (DCDCW) is controlled by means of a battery current controller ($I_{bat}$ controller), which sets the link circuit direct current $I_{dcdc}$ based on the setpoint battery current $I_{bat,soll}$ and based on the actual battery current $I_{bat,ist}$,
    - in which the setpoint torque value $M_{soll}$ is formed from a feedforward control torque $M_{ff}$ and from a specified torque $M_{tf}$ taking into account the relationship of $M_{tf} > \max(M_{ff})$,
    - in which the feedforward control torque $M_{ff}$ is formed based on the actual battery current $I_{bat,ist}$ until the actual battery current $I_{bat,ist}$ corresponds to an ideal battery current $I_{bat,ideal}$,
    - in which the feedforward control torque $M_{ff}$ is calculated using a transfer function $H_{sys}(z)$, which maps the setpoint torque value $M_{soll}$ onto the actual battery current $I_{bat,ist}$ as follows:

    $$I_{bat}(z) = H_{sys}(z) \ M_{soll}(z),$$

    **characterized in that**

    - a zero point z=znmp, which lies outside of the unit circle, is determined by the transfer function $H_{sys}(z)$,
    - the feedforward control torque $M_{ff}$ is calculated as follows:

    $$M_{ff}(z) = I_{bat,neu}(z) \ / \ (H_{sys}(z) \ z)$$

    with:

    $$I_{bat,neu}(z) = I_{bat,ideal}(z) - I_{bat,ideal}(z=znmp)$$

    and with:

    $$I_{bat,neu}[n] = I_{bat,ideal}[n] \text{ for all } n > 0,$$

    such that a pole point/zero point cancellation is achieved by z = znmp at the ideal battery current $I_{bat,ideal}$.

2.  Method according to Claim 1, in which a converter unit is used as DC/AC converter (DCACW).

3.  Method according to Claim 1, in which the actual voltage ($U_{d,ist}$) of the link circuit (ZWK) is applied to a capacitor.

4.  Method according to Claim 1, in which the specified torque ($M_{tf}$) is requested or enabled by a traction unit driver.

5. Method according to Claim 1, in which the ideal battery current ($I_{bat,ideal}$) is determined or defined in such a way that predefined maximum battery currents are not exceeded in driving procedures of the rail vehicle.

6. Method according to Claim 1, in which the ideal battery current ($I_{bat,ideal}$) is determined or defined in such a way that a rapid buildup of a required traction torque of the asynchronous motor (ASM) is made possible.

**Revendications**

1. Procédé de commande d'une sortie de courant d'une batterie (BAT), dans lequel la batterie (BAT) est utilisée comme batterie de traction pour entraîner (ASM) un véhicule ferroviaire,

   - dans lequel un courant réel de batterie $I_{bat,ist}$ est parvenu en tant que courant continu de circuit intermédiaire $I_{dcdc}$ à un circuit intermédiaire (ZWK) par le biais d'un convertisseur CC/CC (DCDCW),
   - dans lequel une tension réelle différentielle $U_{d,ist}$ est appliquée au circuit intermédiaire (ZWK),
   - dans lequel le courant continu de circuit intermédiaire $I_{dcdc}$ est parvenu en tant que courant moteur $I_{mot}$ du circuit intermédiaire (ZWK) à un convertisseur CC/CA (DCACW), qui transforme le courant moteur $I_{mot}$ en un courant alternatif triphasé,
   - dans lequel le courant alternatif triphasé est amené à un moteur asynchrone (ASM) qui est utilisé comme entraînement du véhicule ferroviaire,
   - dans lequel le moteur asynchrone (ASM) et le convertisseur CC/CA (DCACW) est réglé par le biais d'un régulateur de couples (régulateur $M_{asm}$),
   - dans lequel le régulateur de couples (régulateur $M_{asm}$) est utilisé pour le réglage d'une valeur de consigne de couples $M_{soll}$ par laquelle le courant de moteur $I_{mot}$ est réglé,
   - dans lequel un régulateur de tension de circuit intermédiaire (régulateur $U_{zk}$) basé sur une tension de consigne différentielle $U_{d,soll}$ et basé sur une tension réelle différentielle $U_{d,ist}$ détermine un courant de consigne de batterie $I_{bat,soll}$, sur la base duquel est réglé le courant continu de circuit intermédiaire $I_{dcdc}$,
   - dans lequel le convertisseur CC/CC (DCDCW) est réglé par le biais d'un régulateur de courant de batterie (régulateur $I_{bat}$) qui règle le courant continu de circuit intermédiaire $I_{dcdc}$ sur la base du courant de consigne de batterie $I_{bat,soll}$ et sur la base du courant réel de batterie $I_{bat,ist}$
   - dans lequel la valeur de consigne de couples $M_{soll}$ est formée d'un couple de commande prédictive $M_{ff}$ et d'un couple prédéfini $M_{ff}$ en respectant le rapport $M_{ff} > max(M_{ff})$,
   - dans lequel le couple de commande prédictive $M_{ff}$ est formé sur la base du courant réel de batterie $I_{bat,ist}$ jusqu'à ce que le courant réel de batterie $I_{bat,ist}$ corresponde à un courant idéal de batterie $I_{bat,idéal}$,
   - dans lequel le calcul du couple de commande prédictive $M_{ff}$ se fait à l'aide d'une fonction de transfert $H_{sys}(z)$, qui reproduit comme suit la valeur de consigne de couples $M_{soll}$ sur le courant réel de batterie $I_{bat,ist}$ :

$$I_{bat}(z) = H_{sys}(z)\,M_{soll}(z),$$

   **caractérisé en ce**

   - **qu'**un point zéro z=znmp qui se trouve à l'extérieur du cercle d'unité est déterminé par la fonction de transfert $H_{sys}(z)$
   - **que** le calcul du couple de commande prédictive $M_{ff}$ est effectué comme suit :

$$M_{ff}(z) = I_{bat,neu}(z) / (H_{sys}(z)\,z)$$

   avec :

$$I_{bat,neu}(z) = I_{bat,idéal}(z) - I_{bat,idéal}(z=znmp)$$

   et avec :

$$I_{bat,neu}[n] = I_{bat,idéal}[n] \text{ pour tous les } n > 0,$$

de sorte qu'une annulation de points de pôle - points zéro est atteinte par z = znmp dans un courant idéal de batterie $I_{bat,idéal}$.

2. Procédé selon la revendication 1, dans lequel un convertisseur est utilisé comme convertisseur CC/CA (DCACW).

3. Procédé selon la revendication 1, dans lequel la tension réelle ($U_{d,ist}$) du circuit intermédiaire (ZWK) est appliquée à un condensateur.

4. Procédé selon la revendication 1, dans lequel le couple de commande prédictive ($M_{tf}$) est demandé resp. libéré par un conducteur de train.

5. Procédé selon la revendication 1, dans lequel le courant idéal de batterie ($I_{bat,idéal}$) est fixé resp. défini de sorte que des courants maximaux de batterie ne sont pas dépassés lors des opérations de conduite du véhicule ferroviaire.

6. Procédé selon la revendication 1, dans lequel le courant idéal de batterie ($I_{bat,idéal}$) est fixé resp. défini de sorte qu'une mise en place rapide d'un couple de traction requis du moteur asynchrone (ASM) est rendue possible.

# FIG 1

# FIG 2

# FIG 3

EP 4 042 556 B1

FIG 4

FIG 5

EP 4 042 556 B1

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018203015 B3